# EUROPÄISCHE PATENTSCHRIFT

(11) **EP 4 464 976 B1**
(45) Veröffentlichungstag und Bekanntmachung des Hinweises auf die Patenterteilung: **22.04.2026**
(21) Anmeldenummer: 24174965.4
(22) Anmeldetag: 08.05.2024
(51) Int. Cl.: G01B 11/12, G01B 11/02

(54) **SYSTEM UND VERFAHREN ZUM AUTONOMEN POSITIONIEREN EINER KAMERA EINES KANALINSPEKTIONS- UND/ODER WARTUNGSSYSTEMS**
SYSTEM AND METHOD FOR AUTONOMOUSLY POSITIONING A CAMERA OF A CHANNEL INSPECTION AND/OR MAINTENANCE SYSTEM
SYSTÈME ET PROCÉDÉ DE POSITIONNEMENT AUTONOME D'UNE CAMÉRA D'UN SYSTÈME D'INSPECTION ET/OU DE MAINTENANCE DE CANAL

(30) Priorität: 09.05.2023 DE 102023112077
(43) Veröffentlichungstag der Anmeldung: 20.11.2024
(73) Patentinhaber: iPEK International GmbH, 87477 Sulzberg (DE)
(72) Erfinder: Tozzo, Fabrizio, 87787 Wolfertschwenden (DE); Kumar, Rajeesh, 87437 Kempten (DE); Talha, Muhammad, 87471 Durach (DE)
(74) Vertreter: 2s-ip Schramm Schneider Bertagnoll Patent- und Rechtsanwälte Part mbB

(56) Entgegenhaltungen:
- DE-A1- 102005 044 574
- DE-A1- 102012 204 498
- DE-U1- 202013 100 437
- DE-U1- 202014 007 542

## Beschreibung

### Gebiet der Erfindung

Die Erfindung betrifft ein Kanalinspektions- und/oder Wartungssystem, das angepasst ist, eine Kamera autonom in einem Kanalrohr zu positionieren. Ferner betrifft die Erfindung eine entsprechend ausgebildetes Verfahren.

### Hintergrund der Erfindung

In Kanalinspektions- und/oder Wartungssystemen werden Bildaufnahmeeinrichtungen (Kameras bzw. Videokameras) verwendet, um das Innere eines Rohres oder eines Kanals aufzunehmen. Nachfolgend werden Bildaufnahmeeinrichtung, Kamera und Videokamera gemeinsam als Kamera bezeichnet. Vorteilhaft ist es hierbei, wenn die Kamera rohrmittig angeordnet ist, um optimale die Inspektionsergebnisse zu erhalten.

Bei herkömmlichen Rohrinspektionssystemen erfolgt die rohrmittige Anordnung der Kamera manuell. Die Kamera kann beispielsweise vor Durchführung der Inspektion so an einem Fahrwagen angeordnet werden, dass sie bei bekanntem Rohr- bzw. Kanaldurchmesser weitgehend rohrmittig angeordnet ist. Nachteilig hierbei ist allerdings, dass etwa bei Ablagerungen auf der Kanalsohle oder bei sich änderndem Kanaldurchmesser die Kamera nicht mehr rohrmittig angeordnet ist.

Bei Inspektionssystemen, bei denen die Kamera beispielsweise an einer Hebeeinheit eines Fahrwagens angeordnet ist, kann ein Bediener des Systems während einer Inspektion die Hebeeinheit steuern, um damit die Kamera weitgehend rohrmittig auszurichten. Das ist allerdings aufwändig und fehleranfällig und der Bediener des Systems muss etwa Raddurchmesser des Fahrwagens, Abstand zwischen den Rädern, Rohrdurchmesser, Kameragröße und Abmessungen der Hebeeinheit berücksichtigen. Die Qualität einer Inspektion kann so erheblich beeinträchtigt und verzögert werden. Bei mehrfach hintereinander durchgeführten Inspektionen in ein und demselben Kanal können Inspektionsergebnisse, insbesondere Bild- und/oder Videoaufnahmen, nur erschwert verglichen werden, wenn die Bild- und/oder Videoaufnahmen aus unterschiedlichen Positionen im Kanalrohr stammen. Eine korrekte Positionierung einer Kamera im Kanal erfordert besondere Fähigkeiten und große Erfahrung des Bedieners. Zudem besteht das Risiko, dass die Kamera beim Positioniervorgang gegen die Kanalwandung stößt, was zu Schäden an der Kamera oder gar an dem ganzen Inspektionssystem führen kann.

Muss hingegen eine Inspektionseinheit, die keine Kamera ist, rohrmittig ausgerichtet werden, entfällt sogar die Möglichkeit einer "visuellen" Ausrichtung. Solche Inspektionseinheiten müssen daher vor der Inspektion entsprechend ausgerichtet werden, mit den vorstehend beschriebenen Nachteilen. Relevanter Stand der Technik ist DE 20 2013 100 437 U1.

### Aufgabe der Erfindung

Aufgabe der Erfindung ist es daher, Lösungen bereitzustellen, die ein einfacheres, schnelleres und gleichzeitig sichereres Positionieren einer Inspektionseinheit im Kanal ermöglichen.

### Erfindungsgemäße Lösung

Gelöst wird diese Aufgabe mit einem System und einem Verfahren nach den unabhängigen Ansprüchen. Vorteilhafte Ausgestaltung sind in den jeweiligen abhängigen Ansprüchen angegeben.

Bereit gestellt wird demnach ein Kanalinspektions- und/oder Wartungssystem, das zumindest umfasst:
- ein Sensorsystem, das angepasst ist, zumindest drei Abstände zwischen einem vorbestimmten ersten Punkt im Kanalrohr und der Kanalwandung des Kanalrohres zu erfassen, wobei die zumindest drei Abstände ausgehend von dem vorbestimmten ersten Punkt in verschiedenen Richtungen zur Kanalwandung erfasst werden,
- eine Verarbeitungseinheit, die angepasst ist,
   - basierend auf den von dem Sensorsystem erfassten Abständen einen Durchmesser des Kanalrohres und einen vorbestimmten zweiten Punkt im Kanalrohr, vorzugsweise den Mittpunkt des Kanalrohres, zu ermitteln,
   - basierend auf dem ermittelten Durchmesser und den erfassten Abständen einen horizontalen Versatz und einen vertikalen Versatz zwischen dem vorbestimmten ersten Punkt und dem vorbestimmten zweiten Punkt des Kanalrohres zu ermitteln, und
- eine Positioniereinheit, die mit der Verarbeitungseinheit operativ gekoppelt ist, und die angepasst ist, die Position einer Inspektionseinheit in dem Kanalrohr um den horizontalen Versatz und um den vertikalen Versatz zu korrigieren.

Damit kann ohne manuellen Eingriff beispielsweise eine Kamera oder eine andere Inspektionseinheit immer exakt an einer vorbestimmten Position im Kanalrohr ausgerichtet werden, beispielsweise rohrmittig. Vorteilhaft ist es hierbei, dass die Ausrichtung deutlich schneller und exakter bewerkstelligt werden kann, als es bei einer manuellen Ausrichtung möglich wäre.

Werden mehrere Inspektionsvorgänge hintereinander durchgeführt, kann so zudem gewährleistet werden, dass beispielsweise Bild- und/oder Videoaufnahmen immer von der exakt gleichen Position aus gemacht werden (etwa von der Kanalmitte aus), sodass die hintereinander durchgeführten Bild- und/oder Videoaufnahmen besonders einfach und fehlerfrei miteinander verglichen werden können. Das gilt auch, wenn für die verschiedenen Inspektionsvorgänge unterschiedliche Kamerasysteme und/oder unterschiedliche Fahrwägen verwendet werden.

Die Inspektionseinheit kann eine Kamera sein, wobei der vorbestimmte erste Punkt der Mittelpunkt eines Objektivs der Kamera ist. Damit kann die optische Achse der Kamera rohrmittig ausgerichtet werden.

Die Inspektionseinheit, etwa die Kamera, kann an der Positioniereinheit angeordnet sein, wobei die Positioniereinheit aufweist
- eine erste Stelleinrichtung, die angepasst ist, die Inspektionseinheit um den horizontalen Versatz zu bewegen, und
- eine zweite Stelleinrichtung, die angepasst ist, die Inspektionseinheit um den vertikalen Versatz zu bewegen.

In einer Ausgestaltung der Erfindung kann die Positioniereinheit ein Hebearm sein, an dessen freien Ende die Inspektionseinheit angeordnet ist, wobei vorzugsweise das freie Ende der Positioniereinheit in vertikaler und horizontaler Richtung bewegbar ist, um die Position der Inspektionseinheit in vertikaler und horizontaler Richtung zu korrigieren.

Bereit gestellt wird ferner ein Verfahren zum autonomen Positionieren einer Inspektionseinheit in einem Kanalrohr, wobei das Verfahren zumindest umfasst:
- einen ersten Schritt zum Erfassen von zumindest drei Abständen zwischen einem vorbestimmten ersten Punkt im Kanalrohr und der Kanalwandung des Kanalrohres, wobei die zumindest drei Abstände ausgehend von dem vorbestimmten ersten Punkt in verschiedenen Richtungen zur Kanalwandung erfasst werden,
- einen zweiten Schritt zum Ermitteln eines Durchmessers des Kanalrohres und eines vorbestimmten zweiten Punktes im Kanalrohr, vorzugsweise des Mittelpunktes des Kanalrohres, wobei der Durchmesser und der vorbestimmte zweite Punkt basierend auf den erfassten Abständen ermittelt werden,
- einen dritten Schritt zum Ermitteln eines horizontalen Versatzes und eines vertikalen Versatzes zwischen dem vorbestimmten ersten Punkt und dem vorbestimmten zweiten Punkt des Kanalrohres, wobei der dritte Schritt basierend auf dem ermittelten Durchmesser und den erfassten Abständen durchgeführt wird, und
- einen vierten Schritt zum Korrigieren der Position der Inspektionseinheit in dem Kanalrohr um den horizontalen Versatz und um den vertikalen Versatz.

Zum Korrigieren der Position der Inspektionseinheit in dem Kanalrohr kann eine Positioniereinheit vorgesehen werden, wobei die Positioniereinheit aufweist
- eine erste Stelleinrichtung, mit der die Inspektionseinheit um den horizontalen Versatz bewegt wird, und
- eine zweite Stelleinrichtung, mit der die Inspektionseinheit um den vertikalen Versatz zu bewegt wird.

Zum Erfassen der zumindest drei Abstände kann ein Sensorsystem verwendet werden.

Das Sensorsystem kann um einen vorbestimmten zweiten horizontalen Versatz und um einen vorbestimmten zweiten vertikalen Versatz versetzt zum vorbestimmten ersten Punkt außerhalb der Inspektionseinheit angeordnet sein (das gilt auch für das vorstehend beschriebene System), wobei vor dem vierten Schritt
- der horizontale Versatz um den zweiten horizontalen Versatz und
- der vertikale Versatz um den zweiten vertikalen Versatz
korrigiert werden.

Dadurch muss das Sensorsystem nicht unbedingt direkt an der Kamera angeordnet oder in die Kamera integriert werden.

In einer Ausgestaltung der Erfindung können der erste Schritt, der zweite Schritt, der dritte Schritt und der vierte Schritt in regelmäßigen Abständen, vorzugsweise fortlaufend ausgeführt werden, um die Position der Inspektionseinheit in dem Kanalrohr in regelmäßigen Abständen, vorzugsweise fortlaufend zu korrigieren.

Damit kann während des gesamten Inspektionsvorganges gewährleistet werden, dass die Kamera immer rohrmittig ausgerichtet ist, selbst dann, wenn sich etwa der Rohrdurchmesser ändert.

### Kurzbeschreibung der Figuren

Weitere Einzelheiten und Merkmale der Erfindung, sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: ein schematisches Inspektionssystem gemäß der Erfindung in einem Kanal (Seitenansicht);
- Fig. 2: ein schematisches Inspektionssystem gemäß der Erfindung in einem Kanal (Ansicht von vorne); und
- Fig. 3: eine schematische Darstellung eines zu korrigierenden Punktes P in einem Kanal, zur Verdeutlichung des erfindungsgemäßen Verfahrens; und
- Fig. 4: eine schematische Darstellung eines zu korrigierenden Punktes P in einem Kanal, zur Verdeutlichung einer alternativen Ausgestaltung des erfindungsgemäßen Verfahrens.

### Detaillierte Beschreibung der Erfindung

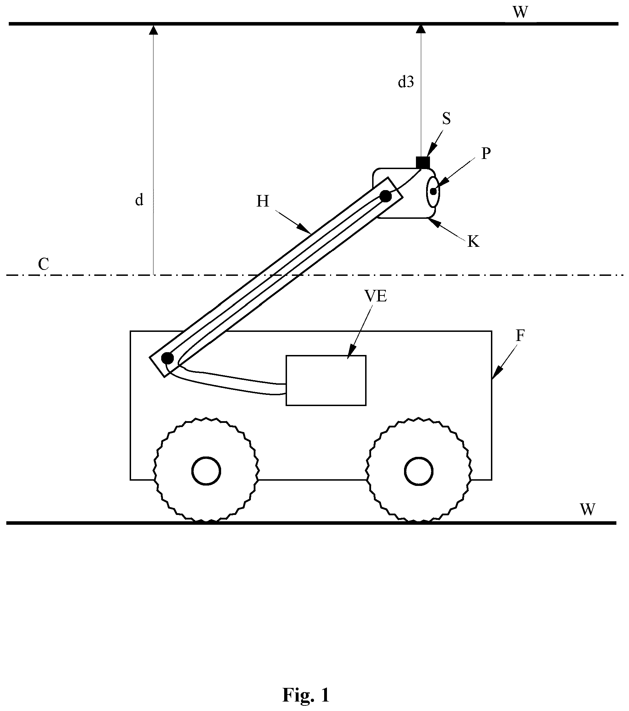

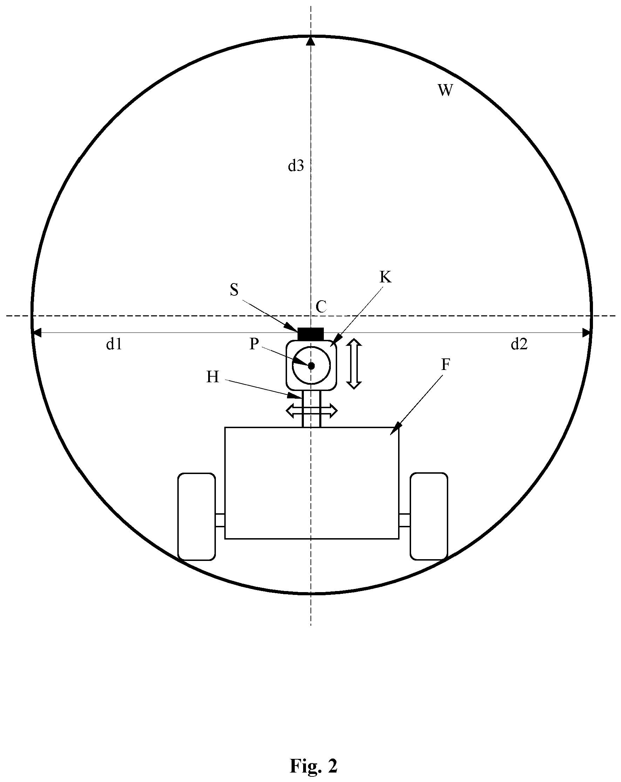

**Fig. 1** zeigt in einer Seitenansicht ein schematisches Inspektionssystem gemäß der Erfindung in einem Kanal, der durch die Kanalwandung W begrenzt ist. **Fig. 2** zeigt in einer Ansicht von vorne ein schematisches Inspektionssystem gemäß der Erfindung in einem Kanal.

In den Kanal befindet sich ein Fahrwagen F eines Inspektionssystems, an dem eine Hebeeinheit H angeordnet ist. An dem freien Ende der Hebeeinheit H ist eine Kamera K (bzw. ein Kamerakopf) angeordnet, die als Bild- oder Videokamera ausgestaltet sein kann.

Gezeigt sind Fig. 1 und Fig. 2 die Kanalmitte C. Wie in Fig. 1 ersichtlich, ist die Kamera oberhalb der Kanalmitte C angeordnet bzw. positioniert. In Fig. 2 ist die Kamera unterhalb der Kanalmitte C angeordnet. In beiden Fällen erfolgen Aufnahmen der Kamera nicht rohrmittig.

Für das rohr- bzw. kanalmittige Ausrichten der Kamera K ist ein Sensorsystem S vorgesehen, das hier an der Kamera K angeordnet ist. Das Sensorsystem S ist hier über eine Datenleitung mit einer Verarbeitungseinheit VE, die im Fahrwagen angeordnet ist, gekoppelt. Die Verarbeitungseinheit VE kann aber auch in der Kamera oder in dem Sensorsystem selbst angeordnet sein. Die Kopplung des Sensorsystem S mit der Verarbeitungseinheit VE kann aber auch drahtlos erfolgen, d.h. von dem Sensorsystem zur Verfügung gestellte Daten können auch drahtlos an die Verarbeitungseinheit VE übertragen werden.

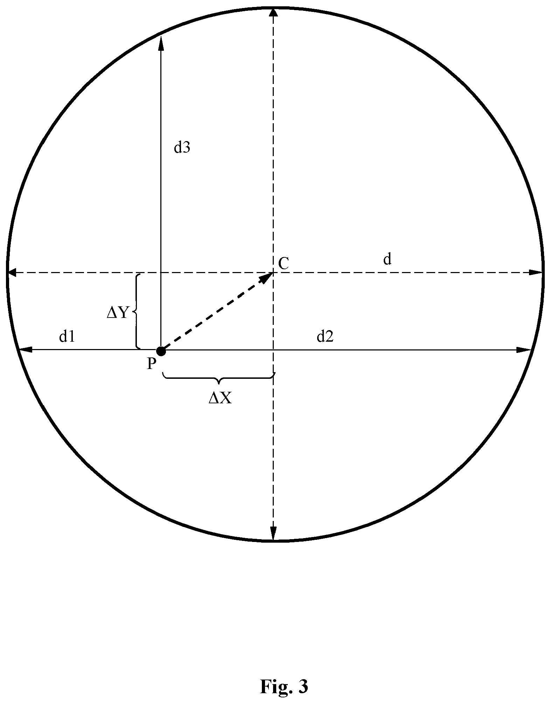

Das Sensorsystem S ist angepasst, zumindest drei Abstände d1; d2; d3 zwischen einem vorbestimmten ersten Punkt P (der hier der Mittelpunkt des Kameraobjektives ist) im Kanalrohr und der Kanalwandung W des Kanalrohres zu erfassen, wobei die zumindest drei Abstände ausgehend von dem vorbestimmten ersten Punkt P in verschiedenen Richtungen zur Kanalwandung erfasst werden, wie in Fig. 3 näher beschrieben wird. Das Sensorsystem S kann Laser-, Ultraschall oder Infrarotsensoren aufweisen, mit denen die Abstände zur Kanalwandung ermittelt werden. Andere Sensortechnologien kann im Sinne der Erfindung ebenfalls verwendet werden.

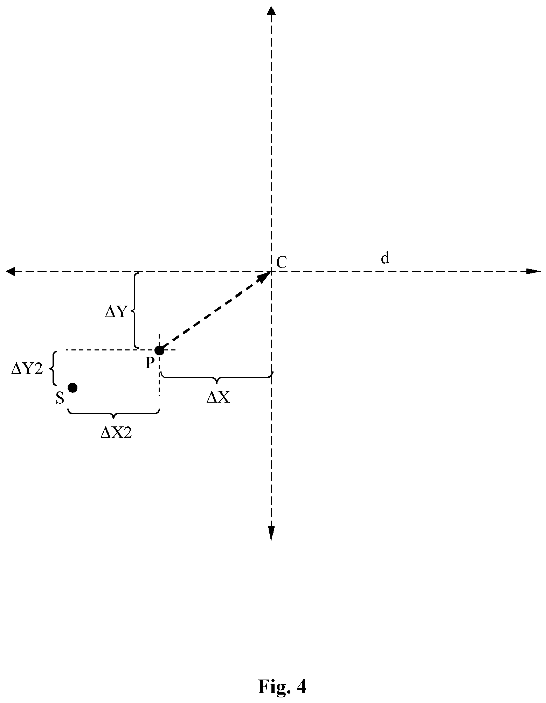

In Fig. 1 und Fig. 2 befindet sich der vorbestimmte Punkt P, zu dem die drei Abstände erfasst werden, außerhalb des Sensorsystems S. Erfindungsgemäß werden die Abstände bezogen auf den vorbestimmten Punkt P erfasst, d.h. der Versatz des Sensorsystems zu dem vorbestimmten Punkt P wird beim Erfassen der Abstände berücksichtigt, wie mit Bezug auf Fig. 4 näher beschrieben wird.

Die erfassten Abstände d1; d2; d3 werden an die Verarbeitungseinheit VE übertragen, die daraus den Durchmesser d des Kanalrohres berechnet, wie ebenfalls mit Bezug auf Fig. 3 näher erläutert.

Aus den erfassten Abständen d1; d2; d3 und dem berechneten Durchmesser d ermittelt die Verarbeitungseinheit VE einen vorbestimmten zweiten Punkt C im Kanalrohr, der vorzugsweise der Mittpunkt des Kanalrohres ist. Es kann aber auch jeder andere Punkt im Kanalrohr sein, wenn die Kamera beispielsweise immer an diesem anderen Punkt ausgerichtet sein soll.

Basierend auf dem ermittelten Durchmesser d und den erfassten Abständen d1; d2; d3 ermittelt die Verarbeitungseinheit VE einen horizontalen Versatz ΔX und einen vertikalen Versatz ΔY zwischen dem vorbestimmten ersten Punkt P und dem vorbestimmten zweiten Punkt C des Kanalrohres. Handelt es sich bei dem vorbestimmten zweiten Punkt C um die Mitte des Kanalrohres ermittelt die Verarbeitungseinheit VE also einen horizontalen Versatz ΔX und einen vertikalen Versatz ΔY, um die die Kameraposition im Kanal korrigiert werden muss, um kanal- bzw. rohrmittig ausgerichtet zu sein.

Die beiden Versätze ΔX und ΔY werden einer Positioniereinheit H, die hier ein Hebearm ist, zur Verfügung gestellt, die dann eine den beiden Versätzen entsprechende Bewegung (nach oben/unten und/oder nach links/recht) durchführt, wodurch die an der Positioniereinheit angeordnete Kamera kanal- bzw. rohrmittig ausgerichtet wird. Nach dem Ausrichten fallen der vorbestimmte erste Punkt P und der vorbestimmte zweite Punkt C zusammen.

Bei dem in Fig. 2 gezeigten Beispiel ist der horizontale Versatz gleich Null und der vertikale Versatz ist größer Null. Das heißt, die Positioniereinheit H muss lediglich nach oben bewegt werden, um die Kamera rohrmittig zu positionieren.

Grundsätzlich ist Positioniereinheit aber so ausgestaltet, dass die Kamera nach oben, nach unten, nach links und nach rechts bewegen kann. Hierzu kann die Positioniereinheit entsprechende Stellmittel (z.B. Stellmotoren) aufweisen.

**Fig. 3** zeigt eine schematische Darstellung eines zu korrigierenden Punktes P in einem Kanal, zur Verdeutlichung des erfindungsgemäßen Verfahrens.

Das erfindungsgemäße Verfahren umfasst im Wesentlichen vier Schritte:
Schritt S1: Erfassen von zumindest drei Abständen d1; d2; d3 zwischen einem vorbestimmten ersten Punkt P im Kanalrohr und der Kanalwandung W des Kanalrohres, wobei die zumindest drei Abstände ausgehend von dem vorbestimmten ersten Punkt P in verschiedenen Richtungen zur Kanalwandung erfasst werden.

Schritt S2: Ermitteln des Durchmessers d des Kanalrohres und eines vorbestimmten zweiten Punktes C im Kanalrohr basierend auf den im Schritt S1 erfassten Abständen d1; d2; d3. Der vorbestimmten zweite Punkt C kann der Mittelpunkt des Kanalrohres sein. Der Durchmesser und der zweite Punkt C können anhand des Umkreises des Dreiecks ermittelt werden, das durch die drei Punkte (gegeben durch die drei Abstände) definiert wird. Andere Berechnungsvorschriften können im Sinne der Erfindung ebenfalls verwendet werden.

Nach Schritt S2 sind der zweite Punkt C (z.B. der Mittelpunkt des Rohres), die drei Abstände d1; d2; d3 zur Kanalwandung W und damit auch der erste Punkt P im Kanalrohr bekannt.

Schritt S3: Basierend auf dem ermittelten Durchmesser d und den erfassten Abständen d1; d2; d3, d.h. basierend auf den beiden Punkten P und C kann nun ein horizontaler Versatz ΔX und ein vertikaler Versatz ΔY zwischen dem Punkt P und dem Punkt C berechnet werden, wobei die beiden Versätze Korrekturwerte angegeben, um die die Position der Kamera in dem Kanal korrigiert werden muss, damit die Kamera rohrmittig ausgerichtet ist.

Schritt S4: Korrigieren der Position der Inspektionseinheit (z.B. der Kamera) in dem Kanalrohr um den horizontalen Versatz ΔX und um den vertikalen Versatz ΔY. Die beiden Versätze werden der Positioniereinheit zur Verfügung gestellt, die dann die entsprechenden Korrekturen in X- (links/rechts) und in Y-Richtung (oben/unten) durchführen kann bzw. durchführt.

In Fig. 3 repräsentieren der Punkt P die optische Mitte (optische Achse) der Kamera und der Punkt C die Mitte des Kanals. Mit dem erfindungsgemäßen Verfahren wird also die optische Mitte P der Kamera zur Mitte C des Kanals verschoben, sodass die beiden Punkte P und C zusammenfallen.

Fig. 4 zeigt eine schematische Darstellung eines zu korrigierenden Punktes P in einem Kanal, zur Verdeutlichung einer alternativen Ausgestaltung des erfindungsgemäßen Verfahrens.

Bei der in Fig. 4 gezeigten Darstellung wird davon ausgegangen, dass das Sensorsystem S nicht an der Kamera angeordnet, sondern beispielsweise an dem Fahrwagen. Das Sensorsystem ist so an dem Fahrwagen angeordnet, dass es die drei Abstände d1; d2; d3 erfassen kann. In Fig. 4 repräsentiert der Punkt P die optische Mitte (optische Achse) der Kamera, der Punkt C die Mitte des Kanals und der Punkt S die Position des Sensorsystems. Das Sensorsystem ist demnach um einen zweiten horizontalen Versatz ΔX2 und um einen zweiten vertikalen Versatz ΔY2 versetzt zum Punkt P angeordnet. Diese beiden Versätze ΔX2 und ΔY2 müssen bei der Berechnung der beiden Versätze ΔX und ΔY berücksichtigt werden, damit die Kamera korrekt in dem Punkt C positioniert wird. Ohne Berücksichtigung der beiden Versätze ΔX2 und ΔY2 würde nach der Korrektur der Kameraposition die Kamera um die Versätze ΔX2 und ΔY2 versetzt zum Punkt C positioniert sein.

Während einer Inspektion kann sich bei einem System, bei dem sich das Sensorsystem nicht mit der Kamera bewegt, die relative Position der Kamera zum Sensorsystem ändern. Das bedeutet, dass sich während einer Inspektion die die Versätze ΔX2 und ΔY2 ändern können. Die Änderungen dieser Versätze ΔX2 und ΔY2 sind der Verarbeitungseinheit VE aber bekannt, da die Verarbeitungseinheit VE selbst die Korrektur der Position der Kamera veranlasst. Die Verarbeitungseinheit VE kann also zu jedem Zeitpunkt die korrekten Versätze ΔX2 und ΔY2 bei der Berechnung der beiden Versätze ΔX und ΔY berücksichtigen. Für den Fall, dass die Kameraposition z.B. manuell geändert wird, müssen diese Änderungen der Verarbeitungseinheit VE bekannt gemacht werden, um die korrekten Versätze ΔX2 und ΔY2 berechnen zu können.

In einer Ausgestaltung der Erfindung können die beiden Versätze ΔX und ΔY fortlaufend ermittelt werden. Sobald einer der beiden oder beide Versätze ΔX, ΔY verschieden von Null sind, kann eine Korrektur der Positionierung der Kamera vorgenommen werden. Damit kann gewährleistet werden, dass die Kamera während des gesamten Inspektionsvorganges rohrmittig positionier bzw. ausgerichtet ist.

Vorstehend wurden Beispiele beschreiben, bei dem die Korrektur der Positionierung der so erfolgt, dass die Kamera immer rohrmittig ausgerichtet ist, d.h. sich immer im Punkt C befindet.

Gemäß einem Aspekt der Erfindung ist es aber auch möglich, die Kamera automatisch so zu positionieren, dass sie immer um einen bestimmten Versatz außerhalb der Rohrmitte C befindet. Dieser bestimmte Versatz muss lediglich bei der Berechnung beiden Versätze ΔX und ΔY berücksichtigt werden. So wird es beispielsweise möglich, die Kamera während eines Inspektionsvorganges immer beispielsweise 20 cm links und 30 cm oberhalb des Rohrmittelpunktes C zu positionieren.

Das erfindungsgemäße System verwendet eine sensorgestützte Durchmessermessung, um die erforderlichen vertikalen und horizontalen Anpassungen bzw. Korrekturen der Kameraposition zu berechnen, die an ein mechanisches Element zur Unterstützung der Kamerabewegung, wie etwa eine Hebeeinheit übermittelt werden.

Die Erfindung stellt damit ein autonomes Kamerapositionierungssystem für Kanalinspektionen zur Verfügung. Das erfindungsgemäße Verfahren vereinfacht den Positionierungsvorgang, macht manuelle Berechnungen und Anpassungen überflüssig und erhöht die Genauigkeit und Effizienz der Inspektion.

Besondere Vorteil der Erfindung sind:
- Verbesserte Genauigkeit: Die sensorbasierte Durchmessermessung und die automatischen Berechnungen verringern das Risiko menschlicher Fehler, was zu einer genaueren Kamerapositionierung und besseren Inspektionsergebnissen führt.
- Konsistenz: Die Erfindung standardisiert den Kamerapositionierungsprozess und liefert konsistente Ergebnisse für verschiedene Inspektionsszenarien und Bediener, was den Vergleich von Inspektionsergebnissen aus verschiedenen Inspektion oder Inspektionsteams erleichtert.
- Zeiteffizienz: Die Eliminierung manueller Berechnungen und Anpassungen beschleunigt den Kamerapositionierungsprozess, spart damit Zeit und senkt die Arbeitskosten, insbesondere bei großen oder komplexen Rohrinspektionsprojekten.
- Geringere Abhängigkeit von den Fähigkeiten des Bedieners: Die vollständig autonome Positionierung der Kamera verringert die Abhängigkeit von den Fähigkeiten und der Erfahrung des Bedieners, was zu einheitlicheren Inspektionsergebnissen führt.
- Erhöhte Anpassungsfähigkeit: Die Erfindung ermöglicht es, mit verschiedenen Sensortypen zu arbeiten und kann leicht an unterschiedliche Rohrgrößen und Rohrformen angepasst werden.
- Geringeres Risiko von Geräteschäden: Die genaue und präzise Kamerapositionierung minimiert das Risiko einer Beschädigung der Kamera oder anderer Inspektionsgeräte, wodurch Reparatur- oder Ersatzkosten und Projektverzögerungen verringert werden können.

## Patentansprüche

1. Kanalinspektions- und/oder Wartungssystem, das zumindest umfasst:
- ein Sensorsystem (S), das angepasst ist, zumindest drei Abstände (d1; d2; d3) zwischen einem vorbestimmten ersten Punkt (P) im Kanalrohr und der Kanalwandung (W) des Kanalrohres zu erfassen, wobei die zumindest drei Abstände ausgehend von dem vorbestimmten ersten Punkt in verschiedenen Richtungen zur Kanalwandung erfasst werden,
**dadurch gekennzeichnet, dass** das System weiter umfasst:
- eine Verarbeitungseinheit (VE), die angepasst ist,
- basierend auf den von dem Sensorsystem erfassten Abständen (d1; d2; d3) einen Durchmesser (d) des Kanalrohres und einen vorbestimmten zweiten Punkt (C) im Kanalrohr, vorzugsweise den Mittpunkt des Kanalrohres, zu ermitteln,
- basierend auf dem ermittelten Durchmesser (d) und den erfassten Abständen (d1; d2; d3) einen horizontalen Versatz (ΔX) und einen vertikalen Versatz (ΔY) zwischen dem vorbestimmten ersten Punkt (P) und dem vorbestimmten zweiten Punkt (C) des Kanalrohres zu ermitteln, und
- eine Positioniereinheit (H), die mit der Verarbeitungseinheit operativ gekoppelt ist, und die angepasst ist, die Position einer Inspektionseinheit in dem Kanalrohr um den horizontalen Versatz (ΔX) und um den vertikalen Versatz (ΔY) zu korrigieren.

2. System nach Anspruch 1, wobei die Inspektionseinheit eine Kamera ist und wobei der vorbestimmte erste Punkt (P) der Mittelpunkt eines Objektivs der Kamera ist.

3. System nach Anspruch 1, wobei die Inspektionseinheit an der Positioniereinheit angeordnet ist und wobei die Positioniereinheit aufweist
- eine erste Stelleinrichtung, die angepasst ist, die Inspektionseinheit um den horizontalen Versatz (ΔX) zu bewegen, und
- eine zweite Stelleinrichtung, die angepasst ist, die Inspektionseinheit um den vertikalen Versatz (ΔY) zu bewegen.

4. System nach Anspruch 1, wobei die Positioniereinheit ein Hebearm ist, an dessen freien Ende die Inspektionseinheit angeordnet ist, wobei vorzugsweise das freie Ende der Positioniereinheit in vertikaler und horizontaler Richtung bewegbar ist.

5. Verfahren zum autonomen Positionieren einer Inspektionseinheit in einem Kanalrohr, wobei das Verfahren zumindest umfasst:
- einen ersten Schritt (S1) zum Erfassen von zumindest drei Abständen (d1; d2; d3) zwischen einem vorbestimmten ersten Punkt (P) im Kanalrohr und der Kanalwandung des Kanalrohres, wobei die zumindest drei Abstände ausgehend von dem vorbestimmten ersten Punkt in verschiedenen Richtungen zur Kanalwandung erfasst werden, **dadurch gekennzeichnet, dass** das Verfahren umfasst:
- einen zweiten Schritt (S2) zum Ermitteln eines Durchmessers (d) des Kanalrohres und eines vorbestimmten zweiten Punktes (C) im Kanalrohr, vorzugsweise des Mittelpunktes des Kanalrohres, wobei der Durchmesser und der vorbestimmte zweite Punkt basierend auf den erfassten Abständen (d1; d2; d3) ermittelt werden,
- einen dritten Schritt (S3) zum Ermitteln, basierend auf dem ermittelten Durchmesser (d) und den erfassten Abständen (d1; d2; d3), eines horizontalen Versatzes (ΔX) und eines vertikalen Versatzes (ΔY) zwischen dem vorbestimmten ersten Punkt (P) und dem vorbestimmten zweiten Punkt (C) des Kanalrohres, und
- einen vierten Schritt (S4) zum Korrigieren der Position der Inspektionseinheit in dem Kanalrohr um den horizontalen Versatz (ΔX) und um den vertikalen Versatz (ΔY).

6. Verfahren nach dem vorhergehenden Anspruch, wobei die Inspektionseinheit eine Kamera ist und wobei als vorbestimmter erster Punkt (P) der Mittelpunkt eines Objektivs der Kamera verwendet wird.

7. Verfahren nach Anspruch 6, wobei zum Korrigieren der Position der Inspektionseinheit in dem Kanalrohr eine Positioniereinheit vorgesehen wird, wobei die Positioniereinheit aufweist
- eine erste Stelleinrichtung, mit der die Inspektionseinheit um den horizontalen Versatz (ΔX) bewegt wird, und
- eine zweite Stelleinrichtung, mit der die Inspektionseinheit um den vertikalen Versatz (ΔY) zu bewegt wird.

8. Verfahren nach Anspruch 5, wobei zum Erfassen der zumindest drei Abstände (d1; d2; d3) ein Sensorsystem verwendet wird.

9. Verfahren nach Anspruch 8, wobei das Sensorsystem (S) um einen vorbestimmten zweiten horizontalen Versatz (ΔX2) und um einen vorbestimmten zweiten vertikalen Versatz (ΔY2) versetzt zum vorbestimmten ersten Punkt (P) außerhalb der Inspektionseinheit angeordnet ist, wobei vor dem vierten Schritt (S4)
- der horizontale Versatz (ΔX) um den zweiten horizontalen Versatz (ΔX2) und
- der vertikale Versatz (ΔY) um den zweiten vertikalen Versatz (ΔY2) korrigiert werden.

10. Verfahren nach Anspruch 5, wobei der erste Schritt (S1), der zweite Schritt (S2), der dritte Schritt (S3) und der vierte Schritt (S4) in regelmäßigen Abständen, vorzugsweise fortlaufend ausgeführt werden, um die Position der Inspektionseinheit in dem Kanalrohr in regelmäßigen Abständen, vorzugsweise fortlaufend zu korrigieren.

## Claims

1. A sewer inspection and/or maintenance system comprising at least:
- a sensor system (S) adapted to detect at least three distances (d1; d2; d3) between a predetermined first point (P) in the sewer pipe and the sewer wall (W) of the sewer pipe, wherein the at least three distances are detected from the predetermined first point in different directions to the sewer wall,
**characterized in that** the system further comprises:
- a processing unit (VE) adapted to
- determine a diameter (d) of the sewer pipe and a predetermined second point (C) in the sewer pipe, preferably the center point of the sewer pipe, based on the distances (d1; d2; d3) detected by the sensor system,
- based on the determined diameter (d) and the detected distances (d1; d2; d3), to determine a horizontal offset (ΔX) and a vertical offset (ΔY) between the predetermined first point (P) and the predetermined second point (C) of the sewer pipe, and
- a positioning unit (H) that is operatively coupled to the processing unit and is adapted to correct the position of an inspection unit in the sewer pipe by the horizontal offset (ΔX) and the vertical offset (ΔY).

2. System according to claim 1, wherein the inspection unit is a camera and wherein the predetermined first point (P) is the center point of a lens of the camera.

3. System according to claim 1, wherein the inspection unit is arranged on the positioning unit and wherein the positioning unit comprises
- a first actuator adapted to move the inspection unit by the horizontal offset (ΔX), and
- a second actuator adapted to move the inspection unit by the vertical offset (ΔY).

4. System according to claim 1, wherein the positioning unit is a lifting arm, at the free end of which the inspection unit is arranged, wherein preferably the free end of the positioning unit is movable in the vertical and horizontal directions.

5. Method for autonomously positioning an inspection unit in a sewer pipe, wherein the method comprises at least:
- a first step (S1) of detecting at least three distances (d1; d2; d3) between a predetermined first point (P) in the sewer pipe and the sewer wall of the sewer pipe, wherein the at least three distances are detected from the predetermined first point in different directions toward the sewer wall,
**characterized in that** the method comprises:
- a second step (S2) for determining a diameter (d) of the sewer pipe and a predetermined second point (C) in the sewer pipe, preferably the center point of the sewer pipe, wherein the diameter and the predetermined second point are determined based on the detected distances (d1; d2; d3),
- a third step (S3) for determining, based on the determined diameter (d) and the detected distances (d1; d2; d3), a horizontal offset (ΔX) and a vertical offset (ΔY) between the predetermined first point (P) and the predetermined second point (C) of the sewer pipe, and
- a fourth step (S4) for correcting the position of the inspection unit in the sewer pipe by the horizontal offset (ΔX) and by the vertical offset (ΔY).

6. Method according to the preceding claim, wherein the inspection unit is a camera and wherein the center point of a lens of the camera is used as the predetermined first point (P).

7. Method according to claim 6, wherein a positioning unit is provided for correcting the position of the inspection unit in the sewer pipe, wherein the positioning unit comprises
- a first actuator for moving the inspection unit by the horizontal offset (ΔX), and
- a second actuator for moving the inspection unit by the vertical offset (ΔY).

8. Method according to claim 5, wherein a sensor system is used to detect the at least three distances (d1; d2; d3).

9. Method according to claim 8, wherein the sensor system (S) is arranged outside the inspection unit at a predetermined second horizontal offset (ΔX2) and at a predetermined second vertical offset (ΔY2) from the predetermined first point (P), wherein before the fourth step (S4)
- the horizontal offset (ΔX) is offset by the second horizontal offset (ΔX2) and
- the vertical offset (ΔY) is corrected by the second vertical offset (ΔY2).

10. Method according to claim 5, wherein the first step (S1), the second step (S2), the third step (S3), and the fourth step (S4) are performed at regular intervals, preferably continuously, in order to correct the position of the inspection unit in the sewer pipe at regular intervals, preferably continuously.

## Revendications

1. Système d'inspection et/ou d'entretien de canalisations, comprenant au moins :
- un système de capteurs (S) adapté pour détecter au moins trois distances (d1 ; d2 ; d3) entre un premier point prédéfini (P) dans le tuyau d'égout et la paroi (W) de la canalisation, les au moins trois distances étant détectées à partir du premier point prédéfini dans différentes directions par rapport à la paroi de la canalisation,
**Caractérisé en ce que** le système comprend en outre:
- une unité de traitement (VE) qui est adaptée pour
- déterminer, sur la base des distances (d1 ; d2 ; d3) détectées par le système de capteurs, un diamètre (d) du tuyau d'égout et un deuxième point prédéfini (C) dans le tuyau d'égout, de préférence le centre du tuyau d'égout,
- déterminer, sur la base du diamètre déterminé (d) et des distances détectées (d1 ; d2 ; d3), un décalage horizontal (ΔX) et un décalage vertical (ΔY) entre le premier point prédéterminé (P) et le deuxième point prédéterminé (C) du tuyau d'égout, et
- une unité de positionnement (H) qui est couplée de manière opérationnelle à l'unité de traitement et qui est adaptée pour corriger la position d'une unité d'inspection ( ) dans le tuyau d'égout de manière à compenser le décalage horizontal (ΔX) et le décalage vertical (ΔY).

2. Système selon la revendication 1, dans lequel l'unité d'inspection est une caméra et dans lequel le premier point prédéterminé (P) est le centre d'un objectif de la caméra.

3. Système selon la revendication 1, dans lequel l'unité d'inspection est disposée sur l'unité de positionnement et dans lequel l'unité de positionnement comprend
- un premier dispositif de réglage adapté pour déplacer l'unité d'inspection du décalage horizontal (ΔX), et
- un deuxième dispositif de réglage adapté pour déplacer l'unité d'inspection du décalage vertical (ΔY).

4. Système selon la revendication 1, dans lequel l'unité de positionnement est un bras de levage à l'extrémité libre duquel est disposée l'unité d'inspection, l'extrémité libre de l'unité de positionnement étant de préférence mobile dans les directions verticale et horizontale.

5. Procédé pour positionner de manière autonome une unité d'inspection dans un tuyau d'égout, le procédé comprenant au moins :
- une première étape (S1) consistant à détecter au moins trois distances (d1 ; d2 ; d3) entre un premier point prédéterminé (P) dans le tuyau d'égout et la paroi du tuyau d'égout, les au moins trois distances étant détectées à partir du premier point prédéterminé dans différentes directions par rapport à la paroi du tuyau,
**Caractérisé en ce que** le procédé comprend:
- une deuxième étape (S2) pour déterminer un diamètre (d) du tuyau d'égout et un deuxième point prédéterminé (C) dans le tuyau d'égout, de préférence le centre du tuyau d'égout, le diamètre et le deuxième point prédéterminé étant déterminés sur la base des distances détectées (d1 ; d2 ; d3),
- une troisième étape (S3) pour déterminer, sur la base du diamètre déterminé (d) et des distances détectées (d1 ; d2 ; d3) pour déterminer un décalage horizontal (ΔX) et un décalage vertical (ΔY) entre le premier point prédéterminé (P) et le deuxième point prédéterminé (C) du tuyau d'égout, et
- une quatrième étape (S4) consistant à corriger la position de l'unité d'inspection dans le tuyau d'égout du décalage horizontal (ΔX) et du décalage vertical (ΔY).

6. Procédé selon la revendication précédente, dans lequel l'unité d'inspection est une caméra et dans lequel le premier point prédéterminé (P) est le centre d'un objectif de la caméra.

7. Procédé selon la revendication 6, dans lequel une unité de positionnement est prévue pour corriger la position de l'unité d'inspection dans la canalisation, l'unité de positionnement comprenant
- un premier dispositif de réglage permettant de déplacer l'unité d'inspection du décalage horizontal (ΔX), et
- un deuxième dispositif de réglage permettant de déplacer l'unité d'inspection du décalage vertical (ΔY).

8. Procédé selon la revendication 5, dans lequel un système de capteurs est utilisé pour détecter les au moins trois distances (d1 ; d2 ; d3).

9. Procédé selon la revendication 8, dans lequel le système de capteurs (S) est disposé à l'extérieur de l'unité d'inspection, décalé d'un deuxième décalage horizontal prédéfini (ΔX2) et d'un deuxième décalage vertical prédéfini (ΔY2) par rapport au premier point prédéfini (P), dans lequel, avant la quatrième étape (S4)
- le décalage horizontal (ΔX) est décalé du deuxième décalage horizontal (ΔX2) et
- le décalage vertical (ΔY) est corrigé du deuxième décalage vertical (ΔY2)

10. Procédé selon la revendication 5, dans lequel la première étape (S1), la deuxième étape (S2), la troisième étape (S3) et la quatrième étape (S4) sont exécutées à intervalles réguliers , de préférence en continu, afin de corriger la position de l'unité d'inspection dans la canalisation à intervalles réguliers, de préférence en continu.
